# EUROPÄISCHE PATENTSCHRIFT

(11) **EP 4 058 681 B1**
(45) Veröffentlichungstag und Bekanntmachung des Hinweises auf die Patenterteilung: **02.07.2025**
(21) Anmeldenummer: 20804223.4
(22) Anmeldetag: 09.11.2020
(51) Int. Cl.: F16D 13/76, F16D 1/033, F16D 13/52, F16D 13/64, F16H 45/02

(54) **NABENANORDNUNG, HYBRIDMODUL MIT DER NABENANORDNUNG SOWIE VERFAHREN ZUR MONTAGE DER NABENANORDNUNG**
HUB ASSEMBLY, HYBRID MODULE COMPRISING THE HUB ASSEMBLY, AND METHOD OF ASSEMBLING THE HUB ASSEMBLY
ASSEMBLAGE DE MOYEU, MODULE HYBRIDE COMPRENANT L'ASSEMBLAGE DE MOYEU, ET MÉTHODE D'ASSEMBLAGE DE L'ASSEMBLAGE DE MOYEU

(30) Priorität: 12.11.2019 DE 102019217415
(43) Veröffentlichungstag der Anmeldung: 21.09.2022
(73) Patentinhaber: ZF Friedrichshafen AG, 88046 Friedrichshafen (DE)
(72) Erfinder: BAUER, Thomas, 97633 Großbardorf (DE)
(86) Internationale Anmeldenummer: PCT/EP2020/081456
(87) Internationale Veröffentlichungsnummer: WO 2021/094243

(56) Entgegenhaltungen:
- WO-A1-2013/049885
- CN-A- 106 763 245
- CN-A- 108 488 248
- CN-A- 108 488 248
- CN-U- 204 140 717
- CZ-A3- 2 006 155
- DE-A1- 102015 216 356
- DE-A1- 102015 216 356
- DE-A1- 102018 206 171
- DE-A1- 102018 206 171
- DE-C- 636 367
- GB-A- 824 931
- US-A- 1 177 638
- US-A- 3 334 495
- US-A- 3 334 495
- US-A1- 2020 063 860
- US-A1- 2020 063 860

## Beschreibung

Die Erfindung betrifft eine Nabenanordnung mit den Merkmalen des Oberbegriffs des Anspruchs 1. Ferner betrifft die Erfindung ein Hybridmodul mit der Nabenanordnung sowie ein Verfahren zur Montage der Nabenanordnung.

Bei der Montage von Hybridmodulen ist es bekannt, eine Verbindung zwischen zwei drehfest verbundenen Bauteilen, z.B. Lamellenträger und Nabe, mittels einer Nietverbindung zu realisieren. Hierzu müssen die beiden Bohrungen in eine Deckungslage gebracht werden, damit ein Niet durchgesteckt werden kann. Dies erfolgt üblicherweise manuell durch einen Werker oder automatisiert über Positionierstifte, die vor der Montage der Nieten wieder entfernt werden müssen.

Die Druckschrift CN 204 140 717 U offenbart eine Bremsscheibenanordnung für ein Schienenfahrzeug, welche eine Bremsscheibe, eine Nabe und Befestigungsbolzen zum Verbinden der Bremsscheibe und der Nabe umfasst. Die Bremsscheibe und die Nabe sind jeweils über mehrere radial ausgerichtete Verbindungsklauen miteinander verbunden, durch welche die Bolzen geführt sind. Zudem ist vorgesehen, dass mindestens drei der an der Bremsscheibe angeordnete Verbindungsklauen mit jeweils einer Positionierungsnut und mindestens drei der an der Nabe angeordnete Verbindungsklauen mit einer Positionierungsöffnung versehen sind, wobei zwischen der Bremsscheibe und der Nabe mindestens drei Positionierpins vorgesehen sind, welche zur Positionierung und Momentenübertragung einerseits in der Positionierungsnut und andererseits in der Positionierungsöffnung angeordnet sind.

Die Druckschrift CZ 2 006 155 A3 offenbart eine Radnabenanordnung für ein Fahrzeug, welche eine Radnabe, eine Bremsscheibe und ein Fahrzeugrad aufweist. Die Radnabe weist auf einer Seite eines Flansches eine Zentrierkontur mit einer umlaufend unterbrochenen Außenfläche auf, wobei hierzu mehrere Entlastungsnuten in die Außenfläche eingebracht sind.

Die Druckschrift WO 2013/049885 A1 offenbart eine Kupplungsanordnung, umfassend, ein erstes Kupplungselement, das über einer ersten Welle angeordnet werden kann; ein zweites Kupplungselement, das über einer zweiten Welle angeordnet werden kann; eine Mehrzahl von Verbindungselementen, um das erste Kupplungselement mit dem zweiten Kupplungselement zu verbinden; ein erstes Klemmelement, das über dem ersten Kupplungselement angeordnet werden kann, um das erste Kupplungselement an die erste Welle zu klemmen; und ein zweites Klemmelement, das über dem zweiten Kupplungselement angeordnet werden kann, um das zweite Kupplungselement an die zweite Welle zu klemmen; wobei mindestens eines der Verbindungselemente innerhalb des ersten Klemmelements und des zweiten Klemmelements angeordnet ist.

Die Druckschrift CN 106 763 245 A offenbart eine Verbindungsstruktur zur Verbindung einer Abtriebswelle eines Getriebes mit einer Getriebewelle. Die Verbindungsstruktur umfasst einen ersten Flansch zur Verbindung mit einer der Wellen und einen zweiten Flansch zur Verbindung der anderen Abtriebswelle, wobei die Flansche über eine Verzahnung und durch ein Gewindebefestigungselement miteinander sind.

Die Druckschrift US 1 177 638 A beschreibt eine Kombination von verschiebbaren Köpfen auf den Enden zweier Wellen, welche über ineinandergreifende, drehbar verstellbare Scheiben miteinander verbunden sind.

Die Druckschrift DE 636 367 C offenbart eine lösbare Flanschkupplung für Wellen mit Zentrierflächen an den beiden Kupplungsflanschen und zwischen diesen Flanschen angeordnete, mit in die Zentrierungen der Flansche eingreifenden Passflächen versehenen zweigeteilten Ringen, von denen einer eben ist, während der andere die den Zentrierflächen der beiden Flansche entsprechende Passflächen besitzt.

Due Druckschrift GB 824 931 A beschreibt eine dauerhafte Verbindung zwischen zwei drehbaren Teilen einer Maschine zur Drehmomentübertragung, wobei die beiden drehbaren Teile komplementäre Kupplungsflächen, die jeweils mit radial oder quer verlaufenden, ineinandergreifenden, konischen Zähnen versehen sind, aufweise und durch Bolzen und Muttern oder Schrauben zusammengehalten und zusammengepresst werden.

Die Druckschrift CN 108 488 248 A offenbart eine Kupplung für ein Kraftfahrzeug, umfassend ein erstes und ein zweites Kupplungsteil sowie ein zentrales Kupplungsteil, wobei das erste und das zweite Kupplungsteil jeweils über das zentrale Kupplungsteil in Umfangsrichtung formschlüssig miteinander in Eingriff stehen. Das zentrale Kupplungsteil weist hierzu an einer Vorderseite und an einer Rückseite jeweils eine Formschlusskontur auf, wobei jede der Formschlusskonturen Positionierungsfedern umfasst. In einem Kupplungszustand sind die Positionierungsfedern jeweils in einer Bohrung aufgenommen, welche in einer an dem ersten bzw. zweiten Kupplungsteil zur der Formschlusskontur komplementären Gegenkontur angeordnet sind.

Die Druckschrift US 3 334 495 A offenbart eine Kupplung zum antreibbaren Verbinden einer ersten und einer zweiten Welle, wobei die beiden Wellen jeweils drehfest mit einer Nabe verbunden sind. Zwischen den beiden Naben ist ein Kupplungszwischenstück angeordnet, welches für eine genaue axiale Ausrichtung der Naben dient. Die Naben und das Kupplungszwischenstück weisen jeweils eine Vielzahl von in Umfangsrichtung beabstandeten bogenförmigen Vorsprüngen auf, die sich axial erstrecken. Die Kupplung wird zusammengebaut, indem das Kupplungszwischenstück radial zwischen die Naben geschoben wird, bis die Achse des Zwischenstücks mit der Achse der Naben fluchtet. Das Zwischenstück wird dann um 45° gegenüber den Naben gedreht, so dass die Vorsprünge radial mit den Vorsprüngen fluchten. Die Naben werden dann mittels Schrauben durch das Zwischenstück hindurch miteinander verschraubt.

Die Druckschrift DE 10 2015 216 356 A1 offenbart eine Kupplungsscheibe mit einem Eingangsteil und einem Ausgangsteil. Das Eingangsteil ist aus zwei axial beabstandete Flanschteilen gebildet, die mittels Abstandsbolzen fest miteinander verbunden. Das Ausgangsteil ist aus zwei weiteren Flanschteilen gebildet, die mit einer Nabe mittels einer Verzahnung unter Ausbildung eines Verdrehspiels drehfest verbunden sind. Axial zwischen den beiden Flanschteilen ist schwimmend ein Zwischenflansch angeordnet.

Die Druckschrift DE 10 2018 206 171 A1 offenbart eine Planetenaufnahmevorrichtung zur Aufnahme von Planetenrädern für ein Planetengetriebe, wobei die Planetenaufnahmevorrichtung ein erstes Abdeckelement zur axialen Abdeckung von Planetenrädern; ein zweites Abdeckelement zur axialen Abdeckung von Planetenrädern; einen Verbindungskörper, welcher zwischen dem ersten und dem zweiten Abdeckelement angeordnet ist und das erste Abdeckelement mit dem zweiten Abdeckelement verbindet; wobei der Verbindungskörper eine Grundplatte und auf einander abgewandten Seiten der Grundplatte jeweils zwei oder mehr als zwei an einem radial äußeren Bereich der Grundplatte von der Grundplatte in axialer Richtung weg ragende Verbindungsvorsprünge umfasst, wobei der Verbindungskörper an den Verbindungsvorsprüngen mit den Abdeckelementen drehfest verbunden ist.

Die Druckschrift DE 102017129262 A1 offenbart ein Hybridmodul für einen Antriebsstrang eines Fahrzeugs, mit einem Lamellenträger, an dem ein Antriebselement angebracht ist, wobei das Antriebselement stoff- und/oder kraftschlüssig an dem Lamellenträger befestigt ist oder das Antriebselement in den Lamellenträger integriert ist. Insbesondere ist das Antriebselement über eine Schweißverbindung, eine Nietverbindung oder eine Schraubverbindung an dem Lamellenträger befestigt.

Die Erfindung hat sich zur Aufgabe gestellt, eine Nabenanordnung der eingangs genannten Art zu schaffen, welche sich durch eine vereinfachte Montage auszeichnet. Ferner ist es Aufgabe der Erfindung ein Hybridmodul mit der Nabenanordnung sowie ein Verfahren zur Montage der Nabenanordnung vorzuschlagen.

Diese Aufgabe wird erfindungsgemäß durch eine Nabenanordnung mit den Merkmalen des Anspruchs 1, durch ein Hybridmodul mit den Merkmalen des Anspruchs 8 sowie ein Verfahren mit den Merkmalen des Anspruchs 9 gelöst. Vorteilhafte Ausgestaltungen ergeben sich aus den Unteransprüchen, den Zeichnungen und/oder der Beschreibung.

Gegenstand der Erfindung ist eine Nabenanordnung, welche insbesondere zur Übertragung eines Drehmoments dient. Vorzugsweise ist die Nabenanordnung in einem Antriebsstrang, insbesondere eines Fahrzeugs, angeordnet und/oder anordbar. Besonders bevorzugt ist die Nabenanordnung drehfest mit einer um eine Hauptachse rotierbare Welle gekoppelt und/oder koppelbar.

Die Nabenanordnung weist einen ersten Verbindungspartner und einen zweiten Verbindungspartner auf. Insbesondere sind der erste und der zweite Verbindungspartner als zwei separate Bauteile ausgebildet. Vorzugsweise dienen der erste und/oder der zweite Verbindungspartner jeweils zur Übertragung des Drehmoments auf ein getriebetechnisch und/oder antriebstechnisch gekoppeltes Bauteil. Der erste und der zweite Verbindungspartner sind in Bezug auf eine gemeinsame Hauptachse koaxial und/oder konzentrisch zueinander angeordnet. Vorzugsweise sind der der erste und/oder der zweite Verbindungspartner rotationssymmetrisch ausgebildet, wobei die Hauptachse durch eine Rotationsachse der Verbindungspartner definiert ist.

Der erste Verbindungspartner weist einen ersten Anlageabschnitt auf und der zweite Verbindungspartner weist einen zweiten Anlageabschnitt auf. Vorzugsweise sind der erste und der zweite Verbindungspartner in Bezug auf die Hauptachse über ihre Anlageabschnitte axial aneinander abgestützt. Beispielsweise ist der erste und/oder der zweite Anlageabschnitt als ein radial nach innen oder außen gerichteter Flansch ausgebildet.

Die Nabenanordnung weist mehrere Verbindungselemente auf, welche insbesondere zur drehfesten Verbindung der Verbindungspartner ausgebildet und/oder geeignet sind. Insbesondere dienen die Verbindungselemente zur form- und/oder kraftschlüssigen Verbindung der Verbindungspartner. Insbesondere sind die Verbindungspartner über die Verbindungselemente lösbar oder bedingt lösbar miteinander verbunden und/oder verbindbar. Der erste und der zweite Anlageabschnitt weisen jeweils mehrere Aufnahmeöffnungen auf, welche zur Aufnahme jeweils eines Verbindungselements ausgebildet und/oder geeignet sind. Insbesondere sind die Aufnahmeöffnungen des jeweils zugehörigen Anlageabschnitts auf einem Teilkreis um die Hauptachse verteilt angeordnet. In einem Montagezustand ist jeweils ein Verbindungselement durch eine Aufnahmeöffnung des ersten Anlageabschnitts und durch eine Aufnahmeöffnung des zweiten Anlageabschnitts, insbesondere passgenau, geführt, um die beiden Verbindungspartner drehfest miteinander zu verbinden. Erfindungsgemäß wird in einer Einbausituation das Drehmoment von dem einen Verbindungspartner über die Verbindungselemente auf den anderen Verbindungspartner übertragen. Beispielsweise sind die Aufnahmeöffnungen als Bohrungen oder Durchbrüche ausgebildet.

Im Rahmen der Erfindung wird vorgeschlagen, dass der erste und der zweite Verbindungspartner über eine Formschlussverbindung zueinander vorpositioniert sind. Insbesondere ist "vorpositioniert" dahingehend zu verstehen, dass die Verbindungspartner vor dem Einsetzen der Verbindungselemente in relativ zueinander festgelegten Endlagen über die Formschlussverbindung positioniert werden. Dabei sind die Aufnahmeöffnungen des ersten und des zweiten Anlageabschnitts in Umlaufrichtung um die Hauptachse jeweils paarweise lagerichtig zueinander ausgerichtet, wenn die Verbindungspartner über die Formschlussverbindung verbunden sind. Insbesondere ist "paarweise lagerichtig" dahingehend zu verstehen, dass die Aufnahmeöffnungen des ersten und des zweiten Verbindungsabschnitts deckungsgleich zueinander angeordnet sind. Besonders bevorzugt sind die beiden Verbindungspartner in Umlaufrichtung durch die Formschlussverbindung relativ zueinander fixiert, also drehfest zueinander ausgerichtet, sodass die Verbindungspartner während der Montage der Verbindungselemente gegen ein Verdrehen gesichert sind. Bevorzugt erfolgt die Ausrichtung der Verbindungspartner und die anschließende Bildung der Formschlussverbindung automatisiert, z.B. über eine Roboteranordnung.

Der Vorteil der Erfindung besteht insbesondere darin, dass durch die Formschlussverbindung der Montageprozess deutlich vereinfacht werden kann, da ein manuelles Ausrichten bzw. ein aufwändiges Sichern über Positionierstifte nicht mehr erforderlich ist. Zudem können Montagezeit und -aufwand und somit die Montagekosten deutlich reduziert werden. Ein weiterer Vorteil besteht zudem darin, dass durch die Formschlusskontur die Montagesicherheit über die Dauer des gesamten Montageprozesses gewährleistet werden kann, da die Verbindungspartner zueinander völlig fest fixiert sind oder zumindest nur ein geringes Spiel zueinander aufweisen und eine Relativbewegung während der Montage der Verbindungselemente zwischen den Verbindungspartnern somit entweder vollständig verhindert wird oder bis auf ein geringes Spiel verhindert wird.

Erfindungsgemäß ist vorgesehen, dass der erste Verbindungspartner eine Formschlusskontur und der zweite Verbindungspartner eine Formschlussgegenkontur aufweist. Insbesondere ist die Formschlusskontur durch eine Erhebung gebildet und die Formschlussgegenkontur durch eine entsprechende Aufnahme, z.B. Ausnehmung oder Vertiefung, gebildet. Alternativ kann jedoch auch die Formschlusskontur durch eine Aufnahme und die Formschlussgegenkontur durch eine entsprechende Erhebung gebildet sein. Vorzugsweise schließen sich die Formschlusskontur und die Formschlussgegenkontur unmittelbar an den jeweils zugehörigen Anlageabschnitt an. Bei einer lagerichtigen Positionierung der Aufnahmeöffnungen sowie der Anlageabschnitte sind die Formschlusskontur und die Formschlussgegenkontur miteinander in Eingriff bringbar, sodass die Formschlussverbindung gebildet werden kann.

In einer bevorzugten Ausführung ist vorgesehen, dass die Formschlusskontur ein Kantenprofil und dass die Formschlussgegenkontur ein zu dem Kantenprofil komplementäres Gegenprofil aufweist. Insbesondere ist das Kantenprofil und entsprechend das Gegenprofil als ein Mehrkantprofil, beispielsweise ein Vierkantprofil, ausgebildet. Im Speziellen ist die Formschlusskontur als ein zylindrischer Ansatz ausgebildet, wobei das Kantenprofil durch mehrere Abflachungen, insbesondere Zylinderabflachungen, in Umlaufrichtung gebildet ist. Die Formschlussgegenkontur ist entsprechend als eine zylindrische Aufnahme ausgebildet, welche ebenso viele Abflachungen in Umlaufrichtung wie der zylindrische Ansatz aufweist. Somit wird eine Formschlusskontur vorgeschlagen, welche sich durch eine besonders einfache konstruktive Umsetzung auszeichnet. Zudem kann gewährleistet werden, dass die Bohrungen übereinanderliegen, wenn das Kantenprofil und das Gegenprofil zueinander ausgerichtet werden.

In einer weiteren konkreten Umsetzung ist vorgesehen, dass die Verbindungselemente jeweils als ein Niet ausgebildet sind, sodass die Verbindungspartner über eine Nietverbindung drehfest miteinander verbunden sind. Beispielsweise sind die Niete als Vollniete, Hohlniete oder Halbhohlniete ausgebildet. Insbesondere wird die Nietverbindung durch ein Kalt- oder Warmnietverfahren erzeugt. Durch die lagerichtige Positionierung und Fixierung der Verbindungspartner in Umlaufrichtung können die als Niete ausgebildeten Verbindungselemente besonders einfach in die Aufnahmeöffnungen, vorzugsweise automatisiert, eingesetzt werden.

Alternativ bevorzugt ist auch die Verwendung von Schrauben oder Klemmstiften als Verbindungselemente vorgesehen.

In einer weiteren Ausgestaltung ist vorgesehen, dass der erste Verbindungspartner als ein Massivbauteil ausgebildet ist. Beispielsweise ist der erste Verbindungpartner als ein Drehteil ausgebildet. Alternativ oder optional ergänzend ist der zweite Verbindungspartner und optional weitere Verbindungspartner als ein Umformbauteil ausgebildet. Beispielsweise ist der zweite Verbindungspartner als ein Blechformbauteil ausgebildet.

In einer weiteren Konkretisierung ist vorgesehen, dass die Nabenanordnung einen dritten Verbindungspartner aufweist. Insbesondere ist der dritte Verbindungspartner als ein weiteres separates Bauteil ausgebildet. Besonders bevorzugt ist der dritte Verbindungspartner in Bezug auf die Hauptachse koaxial und/oder konzentrisch zu den beiden anderen Verbindungspartnern angeordnet. Der dritte Verbindungspartner weist einen dritten Anlageabschnitt mit weiteren Aufnahmeöffnungen auf, welche zur Aufnahme der Verbindungselemente ausgebildet und/oder geeignet sind. Dabei ist der zweite Verbindungspartner über den zweiten Anlageabschnitt in einer axialen Richtung und der dritte Verbindungspartner über den dritten Anlageabschnitt in einer axialen Gegenrichtung an dem ersten Anlageabschnitt des ersten Verbindungspartners abgestützt. Insbesondere sind die Aufnahmeöffnungen des dritten Anlageabschnitts auf einem weiteren Teilkreis um die Hauptachse verteilt angeordnet. In einem Montagezustand ist jeweils ein Verbindungselement durch die Aufnahmeöffnungen der drei Anlageabschnitte, insbesondere passgenau, geführt, um die drei Verbindungspartner drehfest miteinander zu verbinden. Bevorzugt ist bei dieser Ausführung vorgesehen, dass der zweite und der dritte Verbindungspartner jeweils zur Übertragung des Drehmoments auf jeweils ein getriebetechnisch oder antriebstechnisch gekoppeltes Bauteil dient, wohingegen der erste Verbindungspartner zur Verbindung der beiden anderen Verbindungspartner miteinander und/oder mit einer Welle, z.B. An- oder Abtriebswelle, dient.

In einer bevorzugten Weiterbildung ist vorgesehen, dass der erste und der dritte Verbindungspartner über eine weitere Formschlussverbindung zueinander vorpositioniert sind. Dabei sind die Aufnahmeöffnungen der drei Anlageabschnitte in Umlaufrichtung um die Hauptachse lagerichtig zueinander ausgerichtet, wenn die Verbindungspartner über die Formschlussverbindungen miteinander verbunden sind. Besonders bevorzugt sind alle Verbindungspartner in Umlaufrichtung durch die Formschlussverbindungen relativ zueinander fixiert, sodass die Verbindungspartner während der Montage der Verbindungselemente gegen ein Verdrehen gesichert sind. Somit wird eine einfache Lösung geschaffen, mehrere Verbindungspartner lagerichtig zueinander zu Positionieren und während des Montageprozesses gegen Verdrehen zu sichern.

In einer Weiterbildung ist vorgesehen, dass der erste Verbindungspartner eine weitere Formschlusskontur und der dritte Verbindungspartner eine weitere Formschlussgegenkontur aufweist. Insbesondere ist der erste Verbindungspartner in Bezug auf eine Radialebene der Hauptachse symmetrisch ausgebildet, wobei die Formschlusskontur und die weitere Formschlusskontur als eine beidseitig angeordnete Erhebung oder Aufnahme ausgebildet sind. Alternativ kann jedoch auch die eine Formschlusskontur durch eine Erhebung und die andere Formschlusskontur durch eine Aufnahme gebildet sein. Bei einer lagerichtigen Positionierung der Aufnahmeöffnungen des ersten und des dritten Anlageabschnitts in Umlaufrichtung um die Hauptachse, sind die weitere Formschlusskontur und die weitere Formschlussgegenkontur miteinander in Eingriff bringbar, sodass die weitere Formschlussverbindung gebildet wird.

Ein weiterer Gegenstand der Erfindung betrifft ein Hybridmodul für ein Fahrzeug mit der Nabenanordnung wie diese bereits zuvor beschrieben wurde. Das Hybridmodul umfasst vorzugsweise eine elektrische Maschine, welche vorzugsweise in einem parallelen Hybridantrieb gemeinsam mit einer Verbrennungskraftmaschine auf einen Antriebsstrang des Fahrzeugs wirkt. Insbesondere ist das Hybridmodul als ein sogenanntes P1-Hybridmodul ausgebildet. Unter einem P1-Hybridmodul wird ein Hybridmodul verstanden, welches in dem Antriebsstrang zwischen der Verbrennungskraftmaschine und einem Getriebe angeordnet ist, wobei die elektrische Maschine fest mit einer Antriebswelle der Verbrennungskraftmaschine gekoppelt ist. Alternativ ist das Hybridmodul als ein sogenanntes P2-Hybridmodul ausgebildet. Unter einem P2-Hybridmodul wird ein Hybridmodul verstanden, welches in dem Antriebsstrang zwischen der Verbrennungskraftmaschine und dem Getriebe angeordnet ist, wobei die Verbrennungskraftmaschine über eine Kupplungseinrichtung, insbesondere eine Trennkupplung, von der elektrischen Maschine aus- oder eingekuppelt werden kann.

Gemäß dieser Ausführung ist vorgesehen, dass der erste Verbindungspartner als ein Nabenbauteil ausgebildet ist, welches zur drehfesten Anordnung auf einer Welle ausgebildet und/oder geeignet ist. Insbesondere kann die Welle als die Antriebswelle oder eine Getriebeeingangswelle des Getriebes ausgebildet sein. Vorzugsweise weist das Nabenbauteil eine zentrale Wellenaufnahme auf, durch welche die Welle geführt ist. Beispielsweise weist die Wellenaufnahme eine Innenverzahnung, insbesondere eine Steckverzahnung, auf, über welche das Nabenbauteil mit der Welle drehfest verbunden werden kann.

Alternativ ist der erste Verbindungspartner als ein Flanschbauteil ausgebildet, welches zur drehfesten Verbindung mit einem weiteren Bauteil ausgebildet und/oder geeignet ist. Das weitere Bauteil kann beispielsweise als ein Zweimassenschwungrad ausgebildet sein. Vorzugsweise weist das Flanschbauteil einen Anbindungsabschnitt auf, welcher zur drehfesten Anbindung an das weitere Bauteil dient. Beispielsweise weist der Anbindungsabschnitt eine Außenverzahnung, insbesondere eine Steckverzahnung, auf, über welche das Flanschbauteil mit dem weiteren Bauteil drehfest verbunden werden kann.

Zudem ist der zweite Verbindungspartner als ein Lamellenträger ausgebildet, welcher für eine Lamellenkupplung ausgebildet und/oder geeignet ist. Insbesondere ist der Lamellenträger für die Trennkupplung, auch als K0-Kupplung bekannt, geeignet. Alternativ ist der Lamellenträger für eine weitere Kupplungseinrichtung, insbesondere eine Doppelkupplung geeignet, welche zur selektiven Drehmomentübertragung auf das Getriebe dient. Vorzugsweise ist der Lamellenträger als ein Innenlamellenträger ausgebildet.

Alternativ ist der zweite Verbindungspartner oder optional ergänzend der dritte Verbindungspartner als ein Schaufelrad ausgebildet, welches für einen, insbesondere hydrodynamischen, Drehmomentwandler ausgebildet und/oder geeignet ist. Vorzugsweise ist das Schaufelrad als ein Turbinenrad oder alternativ als ein Pumpenrad des Drehmomentwandlers ausgebildet.

Alternativ ist der zweite Verbindungspartner oder optional ergänzend der dritte Verbindungspartner als ein Rotorträger ausgebildet, welcher für die elektrische Maschine ausgebildet und/oder geeignet ist. Vorzugsweise weist die elektrische Maschine einen Rotor auf, welcher koaxial zu der Hauptachse angeordnet ist. Insbesondere ist der Rotor drehfest auf dem Rotorträger angeordnet.

Ein weiterer Gegenstand der Erfindung betrifft ein Verfahren zur Montage der Nabenanordnung wie diese bereits zuvor beschrieben wurde. Das Verfahren umfasst dabei die folgenden Schritte:
- Bereitstellen des ersten Verbindungspartners;
- Vorpositionieren des zweiten Verbindungspartners über die Formschlussverbindung zu dem ersten Verbindungspartner, um die Aufnahmeöffnungen des ersten und des zweiten Anlageabschnitts in Umlaufrichtung um die Hauptachse paarweise lagerichtig zueinander auszurichten;
- Einsetzen jeweils eines Verbindungselements in die paarweise lagerichtig zueinander ausgerichteten Aufnahmeöffnungen, um die Verbindungspartner drehfest miteinander zu verbinden.

Insbesondere ist einer der Verbindungspartner vorab auf einem Träger positioniert, welcher zugleich einen Teil eines Werkzeugs für die Verbindungselemente bildet. Bei der Vorpositionierung der beiden Verbindungspartner werden der erste Verbindungspartner mit seiner Formschlusskontur und der zweite Verbindungspartner mit seiner Formschlussgegenkontur in Umlaufrichtung miteinander formschlüssig verbunden, wobei deren Aufnahmeöffnungen zueinander lagerichtig positioniert werden. Insbesondere dient die Roboteranordnung zur Durchführung des Verfahrens. Dabei werden das Vorpositionieren der Verbindungspartner und/oder das Einsetzen der Verbindungselemente automatisiert durch mindestens einen oder mehrere Roboter durchgeführt.

In einer weiteren Konkretisierung ist vorgesehen, dass die mindestens zwei Verbindungspartner und optional der dritte Verbindungspartner über einen Nietvorgang miteinander verbunden werden. Hierzu werden die als Niete ausgebildeten Verbindungspartner in die lagerichtig zueinander angeordneten Aufnahmeöffnungen eingesetzt und zur Bildung der Nietverbindung durch ein Nietwerkzeug plastisch verformt. Besonders bevorzugt bildet der Träger eine Hälfte des Nietwerkzeugs, insbesondere einen Gegenhalter.

Optional ist vorgesehen, dass in einem Zwischenschritt, insbesondere vor dem Einsetzen der Verbindungselemente, der dritte Verbindungspartner über die weitere Formschlussverbindung lagerichtig zu dem ersten Verbindungspartner vorpositioniert wird, um die Aufnahmeöffnungen des ersten und des dritten Aufnahmeabschnitts in Umlaufrichtung um die Hauptachse paarweise lagerichtig zueinander auszurichten. Dabei werden der erste Verbindungspartner mit seiner weiteren Formschlusskontur und der dritte Verbindungspartner mit seiner weiteren Formschlussgegenkontur in Umlaufrichtung miteinander formschlüssig verbunden, wobei deren Aufnahmeöffnungen zueinander lagerichtig positioniert werden.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine Explosionsdarstellung einer Nabenanordnung für ein Hybridmodul als ein Ausführungsbeispiel der Erfindung;
- Figur 2: eine axiale Ansicht eines Nabenbauteils der Nabenanordnung aus Figur 1;
- Figur 3a, b: jeweils eine Schnittdarstellung einer alternativen Nabenanordnung als weitere Ausführungsbeispiele der Erfindung.

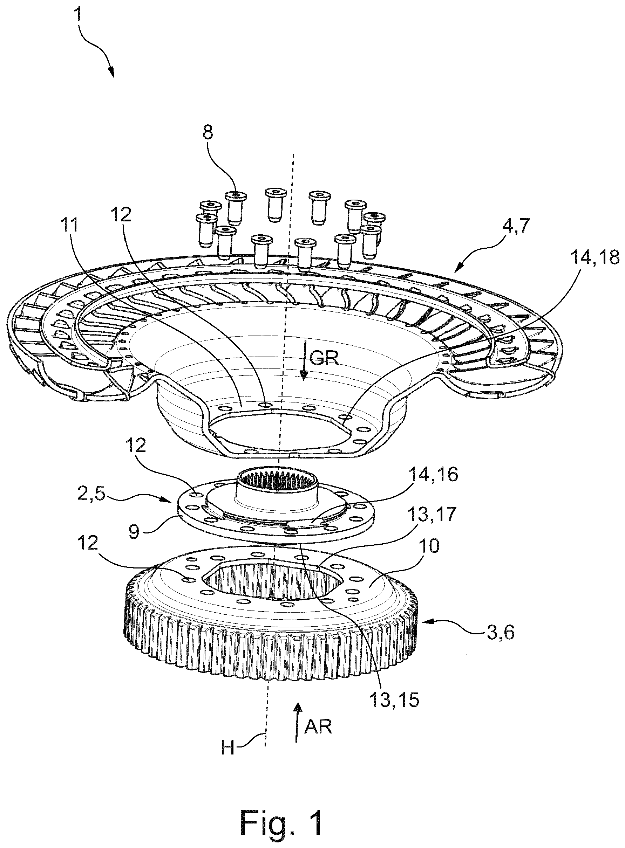

Figur 1 zeigt in einer Explosionsdarstellung eine Nabenanordnung 1 für eine Hybridmodul, nicht dargestellt, als ein Ausführungsbeispiel der Erfindung. Die Nabenanordnung 1 dient dabei zur Übertragung eines Drehmoments zwischen mehreren in Bezug auf eine Hauptachse H koaxial zueinander angeordnete Verbindungspartnern 2, 3, 4. Beispielsweise ist die Nabenanordnung 1 für ein P1- oder P2 Hybridmodul geeignet. In dem gezeigten Ausführungsbeispiel ist die Nabenanordnung 1 beispielweise in einem Momentenpfad zwischen einem hydrodynamischen Drehmomentwandler, nicht dargestellt, und einer Kupplungsvorrichtung, nicht dargestellt, anordbar.

Ein erster Verbindungspartner 2 ist dabei als ein Nabenbauteil 5, insbesondere eine Abtriebsnabe, ausgebildet, welches drehfest auf einer Welle, nicht dargestellt, angeordnet werden kann. Beispielsweise kann die Welle eine durch eine Verbrennungskraftmaschine angetriebene Antriebswelle oder einen Getriebeeingang bildende Getriebewelle sein. Ein zweiter Verbindungspartner 3 ist als ein Lamellenträger 6, insbesondere ein Innenlamellenträger, für die Kupplungsvorrichtung, z.B. eine Doppelkupplung oder eine Trennkupplung, ausgebildet. Die Kupplungsvorrichtung ist bevorzugt als eine Lamellenkupplung ausgebildet, wobei der Lamellenträger 6 über das Nabenbauteil 5 drehfest mit der Welle verbunden ist. Ein dritter Verbindungspartner 4 ist als ein Schaufelrad 7, insbesondere ein Turbinenrad, für den Drehmomentwandler ausgebildet, wobei das Schaufelrad 7 über das Nabenbauteil 5 drehfest mit der Welle verbunden ist. Der erste Verbindungspartner 2 ist beispielsweise als ein Massivbauteil, z.B. als ein Drehteil, und der zweite und der dritte Verbindungspartner 3, 4 jeweils als ein Umformbauteil, z.B. als ein Blechformbauteil, ausgebildet.

Die Verbindungspartner 2, 3, 4 sind über mehrere Verbindungselemente 8 miteinander drehfest verbunden. Hierzu weist der erste Verbindungspartner 2 einen ersten Anlageabschnitt 9, der zweite Verbindungspartner 3 einen zweiten Anlageabschnitt 10 und der dritte Verbindungspartner 4 einen dritten Anlageabschnitt 11 auf. Der erste Anlageabschnitt 9 ist als ein radial nach außen gerichteter Flansch ausgebildet, wobei der zweite und der dritte Anlageabschnitt 10, 11 jeweils als ein radial nach innen gerichteter Flansch ausgebildet sind. Dabei liegt der zweite Verbindungspartner 3 in einer axialen Richtung AR an einer Seite und der dritte Verbindungspartner 4 in einer axialen Gegenrichtung GR an einer anderen Seite des ersten Anlageabschnitts 9 an.

Die Anlageabschnitte 9, 10, 11 der drei Verbindungspartner 2, 3, 4 weisen jeweils mehrere Aufnahmeöffnungen 12 zur Aufnahme der Verbindungselemente 8 auf. Die Aufnahmeöffnungen 12 sind als Durchgangsbohrungen ausgebildet, wobei jeweils ein Verbindungselement 8 durch eine Aufnahmeöffnung 12 des ersten, des zweiten und des dritten Anlageabschnitts 9, 10, 11 geführt ist.

Zum Einsetzen der Verbindungselemente 8 müssen die Aufnahmeöffnungen 12 aller Verbindungspartner 2, 3, 4 in eine Deckungslage gebracht werden, damit die Verbindungselemente 8 ungehindert durchgesteckt werden können. Die Verbindungselemente 8 sind jeweils als Niet, z.B. ein Hohlniet, ausgebildet, welche anschließend automatisiert, z.B. durch einen Roboter, vernietet werden. Die Positionierung von Bauteilen zur anschließenden Vernietung erfolgt bislang durch einen Werker oder automatisiert über Positionierstifte, die zeit- und programmieraufwändig beispielsweise von einem Roboter erkannt, zugeordnet und vor der Montage der Verbindungselemente 8 wieder entfernt werden müssen. Um dies zu vermeiden, müssen andere Lösungen zum deckungsgleichen Positionieren der Aufnahmeöffnungen 12 gefunden werden.

Erfindungsgemäß wird eine Formschlussverbindung 13 zwischen dem ersten und dem zweiten Verbindungspartner 2, 3 und eine weitere Formschlussverbindung 14 zwischen dem ersten und dem dritten Verbindungspartner 2, 4 in Umlaufrichtung um die Hauptachse H vorgeschlagen. Hierzu weist das Nabenbauteil 5 eine Formschlusskontur 15, hier durch den ersten Anlageabschnitt 9 verdeckt, und eine weitere Formschlusskontur 16 auf, wobei der Lamellenträger 6 eine zu der Formschlusskontur 15 komplementäre Formschlussgegenkontur 17 und das Schaufelrad 7 eine zu der weiteren Formschlusskontur 16 komplementäre weitere Formschlussgegenkontur 18 aufweist. In diesem Ausführungsbeispiel ist das Nabenbauteil 5 zumindest annähernd symmetrisch in Bezug auf eine Radialebene der Hauptachse H ausgebildet, wobei unter "annähernd" zu verstehen ist, dass die Formschlusskonturen 16, 17 auf beiden Seiten gleich ausgebildet jedoch in Umlaufrichtung versetzt zueinander angeordnet sein können.

Die Formschlusskonturen 15, 16 sind beidseitig jeweils durch einen zylindrischen Ansatz gebildet, welche sich jeweils unmittelbar an den ersten Anlageabschnitt 9 anschließen. Zur Bildung eines Kantenprofils, insbesondere ein Vierkant-Profil, weisen die Formschlusskonturen 15, 16 jeweils mehrere Abflachungen, insbesondere abgeflachte Seiten des zylindrischen Ansatzes, auf. Die Formschlussgegenkonturen 17, 18 sind als entsprechende Durchbrüche gebildet, welche durch den jeweiligen Anlageabschnitt 10, 11 radial begrenzt bzw. definiert sind. Die Formschlussgegenkonturen 17, 18 weisen zur Bildung eines Gegenprofils ebenfalls mehrere Abflachungen auf. Werden jeweils das Kantenprofil und das zugehörige Gegenprofil zueinander ausgerichtet, ist gewährleistet, dass die Aufnahmeöffnungen 12 lagerichtig übereinanderliegen und die jeweiligen Verbindungspartner 2, 3, 4 gegen ein Verdrehen gesichert sind. Erfindungsgemäß sind die Formschlussverbindungen 13, 14 nicht an der Drehmomentübertragung beteiligt, sondern dienen lediglich zur Positionierung der Verbindungspartner 2, 3, 4 zueinander.

Es ist bevorzugt, dass die Positionierung und die Ausrichtung der Verbindungspartner 2, 3, 4 zueinander ebenfalls durch den Roboter realisiert wird. In einem beispielhaften Montageablauf ist vorgesehen, dass in einem ersten Schritt der Innenlamellenträger 6 auf einem Werkzeugträger, nicht dargestellt, beispielsweise durch den Roboter vorpositioniert wird. Dabei kann der Werkzeugträger zugleich eine Hälfte, z.B. den Gegenhalter, eines Nietwerkzeugs bilden. In einem weiteren Schritt wird das Nabenbauteil 5 mit seiner Formschlusskontur 16 in der Formschlussgegenkontur 17 des Innenlamellenträgers 6 platziert, sodass die Formschlussverbindung 13 gebildet wird und die Aufnahmeöffnungen 12 der beiden Verbindungspartner 2, 3 lagerichtig zueinander ausgerichtet werden. Anschließend wird das Schaufelrad 7 mit der weiteren Formschlussgegenkontur 18 auf der gegenüberliegenden weiteren Formschlusskontur 16 des Nabenbauteils 5 platziert, sodass die weitere Formschlussverbindung 14 gebildet wird und die Aufnahmeöffnungen 12 der beiden Verbindungspartner 3, 4 lagerichtig zueinander ausgerichtet werden. Abschließend setzt der Roboter die als Niete ausgebildeten Verbindungselemente 8 in die deckungsgleich liegenden Aufnahmeöffnungen 12 ein und führt den Nietvorgang durch, sodass die drei Verbindungspartner 2, 3, 4 über eine Nietverbindung drehfest miteinander verbunden werden.

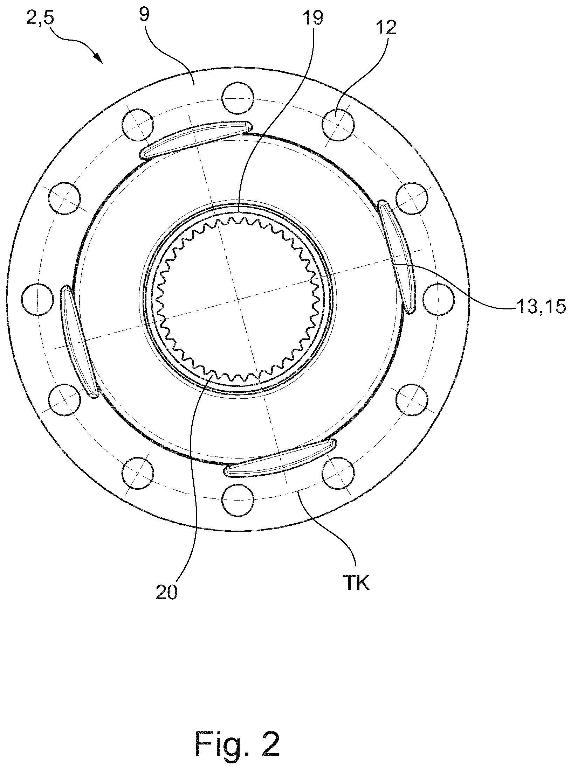

Figur 2 zeigt das Nabenbauteil 5 der Nabenanordnung 1 der Figur 1 in einer axialen Ansicht in Bezug auf die Hauptachse H. Zur Aufnahme der Welle weist das Nabenbauteil 5 eine zentrale Wellenaufnahme 19 auf, durch welche in einer Einbausituation die Welle durchgeführt werden kann. Die Wellenaufnahme 19 weist eine Innenverzahnung 20, insbesondere eine Steckverzahnung, auf, über welche das Nabenbauteil 5 drehfest mit einer entsprechenden Gegenverzahnung der Welle verbunden werden kann.

Die Aufnahmeöffnungen 12 sind auf einem gemeinsamen Teilkreis TK liegend umlaufend um die Hauptachse H verteilt in den ersten Anlageabschnitt 9 eingebracht. Beispielsweise kann der erste Anlageabschnitt 9 mehr als vier, vorzugsweise mehr als zehn, im Speziellen mehr als zwanzig der Aufnahmeöffnungen 12 aufweisen. Zur Bildung des Kantenprofils sind die Abflachungen der Formschlusskonturen 15, 16 jeweils diametral einander gegenüberliegend angeordnet. Beispielsweise können die Formschlusskonturen 15, 16 mehr als zwei, beispielsweise 3, vorzugsweise mehr als vier, beispielsweise 5, im Speziellen mehr als acht der Abflachungen aufweisen.

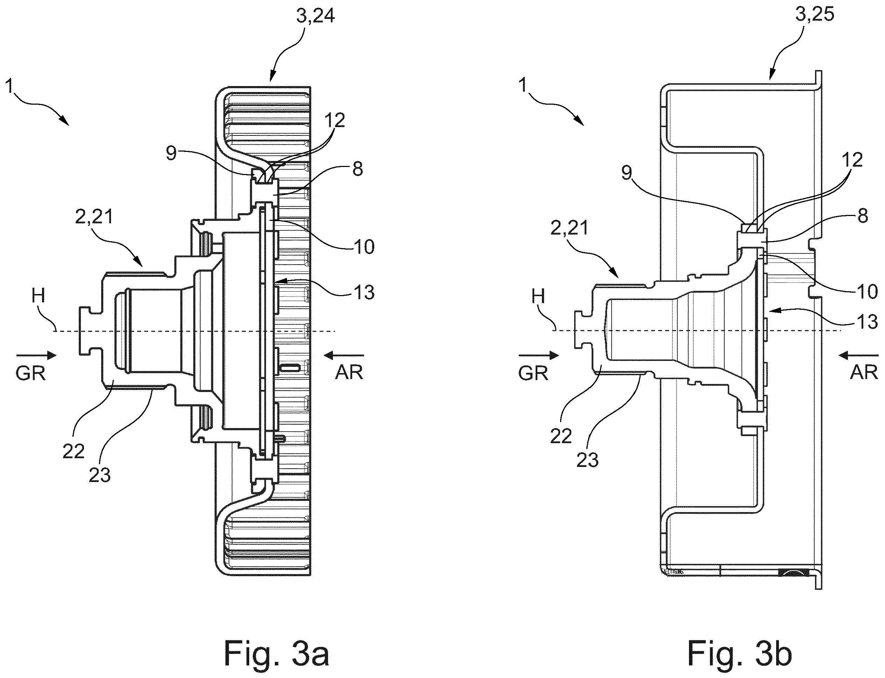

Die Figuren 3a, b zeigen jeweils in einer schematischen Schnittdarstellung zwei unterschiedliche Ausführungsformen der Nabenanordnung 1 als weitere Ausführungsbeispiele der Erfindung. Die in den Figuren 3a, b dargestellten Nabenanordnungen 1 dienen dabei zur Übertragung eines Drehmoments zwischen genau zwei in Bezug auf die Hauptachse H koaxial zueinander angeordnete Verbindungspartnern 2, 3.

Die in der Figur 3a gezeigte Nabenanordnung 1 ist beispielweise in einem Momtenpfad zwischen einem Zweimassenschwungrad, nicht dargestellt, und einer Trennkupplung, nicht dargestellt, anordbar. Der erstes Verbindungspartner 2 ist in dieser Ausführung als ein Flanschbauteil 21, insbesondere ein Lagerflansch, ausgebildet, welcher z.B. drehfest mit einer Schwungmasse, nicht dargestellt, des Zweimassenschwungrads verbunden werden kann. Hierzu weist das Flanschbauteil 21 einen Anbindungsabschnitt 22 mit einer Außenverzahnung 23, insbesondere eine Steckverzahnung, auf, über welche das Flanschbauteil 21 angebunden werden kann. Der zweite Verbindungspartner 3 ist als ein weiterer Lamellenträger 24, insbesondere ein Innenlamellenträger, für die Trennkupplung ausgebildet. Beispielsweise ist die Trennkupplung als eine Lamellenkupplung ausgebildet, wobei der weitere Lamellenträger 24 über das Flanschbauteil 21 drehfest mit dem Zweimassenschwungrad verbunden werden kann. Beispielsweise ist das Flanschbauteil 21 als ein Massivbauteil, z.B. als ein Drehteil, und der weitere Lamellenträger 24 als ein Umformbauteil, z.B. als ein Blechformbauteil, ausgebildet.

Die beiden Verbindungspartner 2, 3 sind über die mehreren Verbindungselemente 8 miteinander drehfest verbunden, wobei der erste Anlageabschnitt 9 als ein radial nach außen gerichteter Flansch und der zweite Anlageabschnitt 10 als ein radial nach innen gerichteter Flansch ausgebildet ist. Dabei liegt der weitere Innenlamellenträger 24 mit seinem Anlageabschnitt 10 in der axialen Richtung AR an ersten Anlageabschnitts 9 an, wobei jeweils ein Verbindungselement 8 durch jeweils eine Aufnahmeöffnung 12 des ersten und des zweiten Anlageabschnitts 9, 10 geführt ist.

Die in der Figur 3b gezeigte Nabenanordnung 1 ist beispielweise in einem Momtenpfad zwischen einem Zweimassenschwungrad, nicht dargestellt, und einer elektrischen Maschine, nicht dargestellt, anordbar. Der erste Verbindungspartner 2 ist in dieser Ausführung als das Flanschbauteil 21 ausgebildet, wie dieses bereits zuvor beschrieben wurde. Der zweite Verbindungspartner 3 hingegen ist als ein Rotorträger 25 für einen Rotor der elektrischen Maschine ausgebildet, wobei der Rotorträger 25 über das Flanschbauteil 21 drehfest mit dem Zweimassenschwungrad verbunden ist. Dabei liegt der Rotorträger 25 mit seinem Anlageabschnitt 10 in der axialen Richtung AR an dem Anlageabschnitt 9 des Flanschbauteils 21 an, wobei jeweils ein Verbindungselement 8 durch jeweils eine Aufnahmeöffnung 12 des ersten und des zweiten Anlageabschnitts 9, 10 geführt ist. Beispielsweise ist das Flanschbauteil 21 als das Massivbauteil und der Rotorträger 24 als ein Umformbauteil, z.B. als ein Blechformbauteil, ausgebildet.

Es ist bevorzugt vorgesehen, dass das Flanschbauteil 21 die Formschlusskontur 15 und dass der weitere Lamellenträger 24 bzw. der Rotorträger 25 die Formschlussgegenkontur 25 aufweist, sodass die Formschlussverbindung 13 zwischen dem Flanschbauteil 21 und dem weiteren Lamellenträger 24 bzw. dem Rotorträger 25 in Umlaufrichtung um die Hauptachse H gebildet ist, um die Aufnahmeöffnungen 12 der beiden Verbindungspartner 2, 3 lagerichtig zueinander zu positionieren.

### Bezugszeichen

- 1: Nabenanordnung
- 2: erster Verbindungspartner
- 3: zweiter Verbindungspartner
- 4: dritter Verbindungspartner
- 5: Nabenbauteil
- 6: Lamellenträger
- 7: Schaufelrad
- 8: Verbindungselemente
- 9: erster Anlageabschnitt
- 10: zweiter Anlageabschnitt
- 11: dritter Anlageabschnitt
- 12: Aufnahmeöffnungen
- 13: Formschlussverbindung
- 14: weitere Formschlussverbindung
- 15: Formschlusskontur
- 16: weitere Formschlusskontur
- 17: Formschlussgegenkontur
- 18: weitere Formschlussgegenkontur
- 19: Wellenaufnahme
- 20: Innenverzahnung
- 21: Flanschbauteil
- 22: Anbindungsabschnitt
- 23: Außenverzahnung
- 24: weiterer Lamellenträger
- 25: Rotorträger

- H: Hauptachse
- AR: axiale Richtung
- GR: axiale Gegenrichtung
- TK: Teilkreis

## Patentansprüche

1. Nabenanordnung (1) zur Übertragung eines Drehmoments,
- mit einem ersten und mit einem zweiten Verbindungspartner (2, 3), wobei der erste und der zweite Verbindungspartner (2, 3) in Bezug auf eine gemeinsame Hauptachse (H) koaxial zueinander angeordnet sind und wobei der erste Verbindungspartner (2) einen ersten Anlageabschnitt (9) und der zweite Verbindungspartner (3) einen zweiten Anlageabschnitt (10) aufweist, wobei der erste und der zweite Verbindungspartner (2, 3) über eine Formschlussverbindung (13) zueinander vorpositioniert sind, wobei der erste Verbindungspartner (2) eine Formschlusskontur (15) und der zweite Verbindungspartner (3) eine Formschlussgegenkontur (17) aufweist,
- mit mehreren Verbindungselementen (8), wobei der erste und der zweite Anlageabschnitt (9, 10) jeweils mehrere Aufnahmeöffnungen (12) zur Aufnahme der Verbindungselemente (8) aufweisen, wobei jeweils ein Verbindungselement (8) durch eine Aufnahmeöffnung (12) des ersten Anlageabschnitts (9) und eine Aufnahmeöffnung (12) des zweiten Anlageabschnitts (9) geführt ist, sodass der erste und der zweite Verbindungspartner (2, 3) über die Verbindungselemente (8) drehfest miteinander verbunden sind, wobei die Formschlusskontur (15) und die Formschlussgegenkontur (17) bei einer lagerichtigen Positionierung der Aufnahmeöffnungen (12) in Umlaufrichtung um die Hauptachse (H) miteinander in Eingriff bringbar sind, sodass die Formschlussverbindung (13) gebildet wird und die Aufnahmeöffnungen (12) des ersten und des zweiten Anlageabschnitts (9, 10) in Umlaufrichtung um die Hauptachse (H) jeweils paarweise lagerichtig zueinander ausgerichtet sind, wobei die Aufnahmeöffnungen (12) deckungsgleich zueinander angeordnet sind
**dadurch gekennzeichnet, dass**
in einer Einbausituation das Drehmoment von dem einen Verbindungspartner (2, 3) über die Verbindungselemente (8) auf den anderen Verbindungspartner (2, 3) übertragen wird, wobei die Formschlussverbindung (13) nicht an der Drehmomentübertragung beteiligt ist, sondern lediglich zur Positionierung der Verbindungspartner (2, 3) zueinander dient.

2. Nabenanordnung (1) nach Anspruch 1, **dadurch gekennzeichnet, dass** die Formschlusskontur (15) ein Kantenprofil aufweist und dass die Formschlussgegenkontur (17) ein zu dem Kantenprofil komplementäres Gegenprofil aufweist.

3. Nabenanordnung (1) nach Anspruch 1 oder 2, **dadurch gekennzeichnet**, die Verbindungselemente (8) jeweils als ein Niet ausgebildet sind, sodass die Verbindungspartner (2, 3) über eine Nietverbindung drehfest miteinander verbunden sind.

4. Nabenanordnung (1) nach einem der vorhergehenden Ansprüche, **dadurch gekennzeichnet, dass** der erste Verbindungspartner (2) als ein Massivbauteil und/oder dass der zweite Verbindungspartner (3) als ein Blechformbauteil ausgebildet ist.

5. Nabenanordnung (1) nach einem der vorhergehenden Ansprüche, **gekennzeichnet durch** einen dritten Verbindungspartner (4), wobei der dritte Verbindungspartner (4) einen dritten Anlageabschnitt (11) mit weiteren Aufnahmeöffnungen (12) zur Aufnahme der Verbindungselemente (8) aufweist, wobei der zweite Verbindungspartner (3) über den zweiten Anlageabschnitt (10) in einer axialen Richtung (AR) und der dritte Verbindungspartner (4) über den dritten Anlageabschnitt (11) in einer axialen Gegenrichtung (GR) an dem ersten Anlageabschnitt (9) des ersten Verbindungspartners (2) abgestützt ist und wobei jeweils ein Verbindungselement (8) durch die Aufnahmeöffnungen (12) des ersten, zweiten und dritten Anlageabschnitts (9, 10, 11) geführt ist, sodass die drei Verbindungspartner (2, 3, 4) über die Verbindungselemente (8) drehfest miteinander verbunden sind.

6. Nabenanordnung (1) nach Anspruch 5, **dadurch gekennzeichnet, dass** der erste und der dritte Verbindungspartner (2, 4) über eine weitere Formschlussverbindung (14) zueinander vorpositioniert sind, sodass die Aufnahmeöffnungen (12) des ersten, des zweiten und des dritten Anlageabschnitts (9, 10, 11) in Umlaufrichtung um die Hauptachse (H) lagerichtig zueinander ausgerichtet sind.

7. Nabenanordnung (1) nach Anspruch 6, **dadurch gekennzeichnet, dass** der erste Verbindungspartner (2) eine weitere Formschlusskontur (16) und der dritte Verbindungspartner (4) eine weitere Formschlussgegenkontur (18) aufweist, wobei die weitere Formschlusskontur (16) und die weitere Formschlussgegenkontur (18) bei einer lagerichtigen Positionierung der Aufnahmeöffnungen (12) in Umlaufrichtung um die Hauptachse (H) miteinander in Eingriff bringbar sind, sodass die weitere Formschlussverbindung (14) gebildet wird.

8. Hybridmodul für ein Fahrzeug mit der Nabenanordnung (1) nach einem der vorhergehenden Ansprüche, **dadurch gekennzeichnet, dass** der erste Verbindungspartner (2) als ein Nabenbauteil (5) zur drehfesten Anordnung auf einer Welle oder als ein Flanschbauteil (21) zur drehfesten Verbindung mit einem weiteren Bauteil ausgebildet ist und dass der zweite Verbindungspartner (3) als ein Lamellenträger (6, 24) für eine Lamellenkupplung oder als ein Schaufelrad (7) für einen Drehmomentwandler oder als ein Rotorträger (25) für eine elektrische Maschine ausgebildet ist.

9. Verfahren zur Montage der Nabenanordnung (1) nach einem der vorhergehenden Ansprüche, bei dem:
- der erste Verbindungspartner (2) bereitgestellt wird;
- der zweite Verbindungspartner (3) über die Formschlussverbindung (13) zu dem ersten Verbindungspartner (2) vorpositioniert wird, um die Aufnahmeöffnungen (12) des ersten und des zweiten Anlageabschnitts (9, 10) in Umlaufrichtung um die Hauptachse (H) paarweise lagerichtig zueinander auszurichten;
- jeweils ein Verbindungselement (8) in die paarweise lagerichtig zueinander ausgerichteten Aufnahmeöffnungen (12) eingesetzt wird, um die Verbindungspartner (2, 3) drehfest miteinander zu verbinden.

10. Verfahren nach Anspruch 9, **dadurch gekennzeichnet, dass** die Verbindungselemente (8) als Niete ausgebildet sind, wobei die mindestens zwei Verbindungspartner (2, 3) über einen Nietvorgang miteinander verbunden werden.

11. Verfahren nach Anspruch 9 oder 10, **dadurch gekennzeichnet, dass** in einem Zwischenschritt der dritte Verbindungspartner (4) über die weitere Formschlussverbindung (14) lagerichtig zum ersten Verbindungspartner (2) vorpositioniert wird, und die Aufnahmeöffnungen (12) des ersten und des dritten Aufnahmeabschnitts (9, 11) in Umlaufrichtung um die Hauptachse (H) paarweise lagerichtig zueinander ausgerichtet werden.

## Claims

1. Hub assembly (1) for transmitting a torque,
- having a first and having a second connection partner (2, 3), wherein the first and the second connection partner (2, 3) are arranged coaxially with respect to each other with respect to a common main axis (H), and wherein the first connection partner (2) has a first contact portion (9) and the second connection partner (3) has a second contact portion (10), wherein the first and the second connection partner (2, 3) are pre-positioned with respect to one another via a form-fitting connection (13), wherein the first connection partner (2) has a form-fitting contour (15) and the second connection partner (3) has a form-fitting mating contour (17),
- having a plurality of connection elements (8), wherein the first and the second contact portion (9, 10) each have a plurality of receiving openings (12) for receiving the connection elements (8), wherein in each case one connection element (8) is guided through a receiving opening (12) of the first contact portion (9) and through a receiving opening (12) of the second contact portion (9) such that the first and the second connection partner (2, 3) are connected to each other for conjoint rotation via the connection elements (8), wherein, when the receiving openings (12) are correctly positioned in the circumferential direction about the main axis (H), the form-fitting contour (15) and the form-fitting mating contour (17) can be brought into engagement with each other such that the form-fitting connection (13) is formed and the receiving openings (12) of the first and of the second contact portion (9, 10) are each oriented in pairs in a positionally correct manner with respect to one another in the circumferential direction about the main axis (H), wherein the receiving openings (12) are arranged congruently with respect to one another,
**characterized in that**
in an installation situation, the torque is transmitted from the one connection partner (2, 3) to the other connection partner (2, 3) via the connection elements (8), wherein the form-fitting connection (13) is not involved in the transmission of torque, but rather serves merely for positioning the connection partners (2, 3) with respect to one another.

2. Hub assembly (1) according to Claim 1, **characterized in that** the form-fitting contour (15) has an edge profile, and **in that** the form-fitting mating contour (17) has a mating profile which is complementary to the edge profile.

3. Hub assembly (1) according to Claim 1 or 2, **characterized in that** the connection elements (8) are each configured in the form of a rivet, and therefore the connection partners (2, 3) are connected to each other for conjoint rotation via a rivet connection.

4. Hub assembly (1) according to any one of the preceding claims, **characterized in that** the first connection partner (2) is designed as a solid component and/or **in that** the second connection partner (3) is designed as a sheet metal moulded component.

5. Hub assembly (1) according to any one of the preceding claims, **characterized by** a third connection partner (4), wherein the third connection partner (4) has a third contact portion (11) with further receiving openings (12) for receiving the connection elements (8), wherein the second connection partner (3), via the second contact portion (10) in an axial direction (AR), and the third connection partner (4), via the third contact portion (11) in an axial counter direction (GR), are supported on the first contact portion (9) of the first connection partner (2), and wherein in each case one connection element (8) is guided through the receiving openings (12) of the first, second and third contact portions (9, 10, 11) such that the three connection partners (2, 3, 4) are connected to one another for conjoint rotation via the connection elements (8).

6. Hub assembly (1) according to Claim 5, **characterized in that** the first and the third connection partner (2, 4) are pre-positioned with respect to one another via a further form-fitting connection (14) such that the receiving openings (12) of the first, the second and the third contact portion (9, 10, 11) are oriented in a positionally correct manner with respect to one another in the circumferential direction about the main axis (H).

7. Hub assembly (1) according to Claim 6, **characterized in that** the first connection partner (2) has a further form-fitting contour (16) and the third connection partner (4) has a further form-fitting mating contour (18), wherein, when the receiving openings (12) are correctly positioned in the circumferential direction about the main axis (H), the further form-fitting contour (16) and the further form-fitting mating contour (18) can be brought into engagement with each other such that the further form-fitting connection (14) is formed.

8. Hybrid module for a vehicle comprising the hub assembly (1) according to any one of the preceding claims, **characterized in that** the first connection partner (2) is configured in the form of a hub component (5) for arranging on a shaft for conjoint rotation or in the form of a flange component (21) for connecting to a further component for conjoint rotation, and **in that** the second connection partner (3) is configured in the form of a disc carrier (6, 24) for a multi-disc clutch, or in the form of a blade wheel (7) for a torque converter, or in the form of a rotor carrier (25) for an electric machine.

9. Method for mounting the hub assembly (1) according to any one of the preceding claims, in which:
- the first connection partner (2) is provided;
- the second connection partner (3) is pre-positioned with respect to the first connection partner (2) via the form-fitting connection (13) in order to orient the receiving openings (12) of the first and the second contact portion (9, 10) in pairs in a positionally correct manner with respect to one another in the circumferential direction about the main axis (H);
- in each case one connection element (8) is inserted into the receiving openings (12) oriented in pairs in a positionally correct manner with respect to one another, in order to connect the connection partners (2, 3) to each other for conjoint rotation.

10. Method according to Claim 9, **characterized in that** the connection elements (8) are configured in the form of rivets, wherein the at least two connection partners (2, 3) are connected to one another via a riveting operation.

11. Method according to Claim 9 or 10, **characterized in that**, in an intermediate step, the third connection partner (4) is pre-positioned correctly with respect to the first connection partner (2) via the further form-fitting connection (14), and the receiving openings (12) of the first and of the third receiving portion (9, 11) are oriented in pairs in a positionally correct manner with respect to one another in the circumferential direction about the main axis (H).

## Revendications

1. Agencement de moyeu (1) pour la transmission d'un couple,
- avec un premier et un deuxième partenaire de liaison (2, 3), le premier et le deuxième partenaire de liaison (2, 3) étant agencés coaxialement l'un par rapport à l'autre par rapport à un axe principal commun (H) et le premier partenaire de liaison (2) présentant une première section d'appui (9) et le deuxième partenaire de liaison (3) une deuxième section d'appui (10), le premier et le deuxième partenaire de liaison (2, 3) étant prépositionnés l'un par rapport à l'autre par l'intermédiaire d'une liaison par complémentarité de forme (13), le premier partenaire de liaison (2) présentant un contour de complémentarité de forme (15) et le deuxième partenaire de liaison (3) présentant un contre-contour de complémentarité de forme (17),
- avec plusieurs éléments de liaison (8), la première et la deuxième section d'appui (9, 10) présentant respectivement plusieurs ouvertures de réception (12) pour la réception des éléments de liaison (8), un élément de liaison (8) étant respectivement guidé à travers une ouverture de réception (12) de la première section d'appui (9) et une ouverture de réception (12) de la deuxième section d'appui (9), de telle sorte que le premier et le deuxième partenaire de liaison (2, 3) sont reliés entre eux de manière solidaire en rotation par l'intermédiaire des éléments de liaison (8), le contour de complémentarité de forme (15) et le contre-contour de complémentarité de forme (17) pouvant être mis en prise l'un avec l'autre lors d'un positionnement correct en position des ouvertures de réception (12) dans la direction de rotation autour de l'axe principal (H), de telle sorte que la liaison par complémentarité de forme (13) est formée et que les ouvertures de réception (12) de la première et de la deuxième section d'appui (9, 10) sont orientées dans la direction de rotation autour de l'axe principal (H) respectivement par paires en position correcte l'une par rapport à l'autre, les ouvertures de réception (12) étant agencées de manière à coïncider l'une avec l'autre
**caractérisé en ce que**
dans une situation de montage, le couple est transmis de l'un des partenaires de liaison (2, 3) à l'autre partenaire de liaison (2, 3) par l'intermédiaire des éléments de liaison (8), la liaison par complémentarité de forme (13) ne participant pas à la transmission du couple, mais servant uniquement au positionnement des partenaires de liaison (2, 3) l'un par rapport à l'autre.

2. Agencement de moyeu (1) selon la revendication 1, **caractérisé en ce que** le contour de complémentarité de forme (15) présente un profil d'arête et **en ce que** le contre-contour de complémentarité de forme (17) présente un contre-profil complémentaire au profil d'arête.

3. Agencement de moyeu (1) selon la revendication 1 ou 2, **caractérisé en ce que** les éléments de liaison (8) sont chacun réalisés sous la forme d'un rivet, de telle sorte que les partenaires de liaison (2, 3) sont reliés entre eux de manière solidaire en rotation par l'intermédiaire d'une liaison rivetée.

4. Agencement de moyeu (1) selon l'une quelconque des revendications précédentes, **caractérisé en ce que** le premier partenaire de liaison (2) est réalisé sous la forme d'un composant massif et/ou **en ce que** le deuxième partenaire de liaison (3) est réalisé sous la forme d'un composant moulé en tôle.

5. Agencement de moyeu (1) selon l'une quelconque des revendications précédentes, **caractérisé par** un troisième partenaire de liaison (4), le troisième partenaire de liaison (4) présentant une troisième section d'appui (11) avec d'autres ouvertures de réception (12) pour recevoir les éléments de liaison (8), le deuxième partenaire de liaison (3) s'appuyant sur la première section d'appui (9) du premier partenaire de liaison (2) par l'intermédiaire de la deuxième section d'appui (10) dans une direction axiale (AR) et le troisième partenaire de liaison (4) par l'intermédiaire de la troisième section d'appui (11) dans une contre-direction axiale (GR), et un élément de liaison (8) étant respectivement guidé à travers les ouvertures de réception (12) de la première, de la deuxième et de la troisième section d'appui (9, 10, 11), de telle sorte que les trois partenaires de liaison (2, 3, 4) sont reliés entre eux de manière solidaire en rotation par l'intermédiaire des éléments de liaison (8).

6. Agencement de moyeu (1) selon la revendication 5, **caractérisé en ce que** le premier et le troisième partenaire de liaison (2, 4) sont prépositionnés l'un par rapport à l'autre par l'intermédiaire d'une autre liaison par complémentarité de forme (14), de telle sorte que les ouvertures de réception (12) de la première, de la deuxième et de la troisième section d'appui (9, 10, 11) sont orientées en position correcte l'une par rapport à l'autre dans la direction de rotation autour de l'axe principal (H).

7. Agencement de moyeu (1) selon la revendication 6, **caractérisé en ce que** le premier partenaire de liaison (2) présente un autre contour de complémentarité de forme (16) et le troisième partenaire de liaison (4) un autre contre-contour de complémentarité de forme (18), l'autre contour de complémentarité de forme (16) et l'autre contre-contour de complémentarité de forme (18) pouvant être mis en prise l'un avec l'autre lors d'un positionnement correct en position des ouvertures de réception (12) dans la direction de rotation autour de l'axe principal (H), de telle sorte que l'autre liaison par complémentarité de forme (14) est formée.

8. Module hybride pour un véhicule avec l'agencement de moyeu (1) selon l'une quelconque des revendications précédentes, **caractérisé en ce que** le premier partenaire de liaison (2) est réalisé sous la forme d'un composant de moyeu (5) pour un agencement solidaire en rotation sur un arbre ou sous la forme d'un composant de bride (21) pour la liaison solidaire en rotation avec un autre composant et **en ce que** le deuxième partenaire de liaison (3) est réalisé sous la forme d'un support de lamelles (6, 24) pour un embrayage à lamelles ou sous la forme d'une roue à aubes (7) pour un convertisseur de couple ou sous la forme d'un support de rotor (25) pour une machine électrique.

9. Procédé de montage de l'agencement de moyeu (1) selon l'une quelconque des revendications précédentes, dans lequel :
- le premier partenaire de connexion (2) est fourni ;
- le deuxième partenaire de liaison (3) est prépositionné par rapport au premier partenaire de liaison (2) par l'intermédiaire de la liaison par complémentarité de forme (13), afin d'orienter les ouvertures de réception (12) de la première et de la deuxième section d'appui (9, 10) par paires en position correcte l'une par rapport à l'autre dans la direction de rotation autour de l'axe principal (H) ;
- un élément de liaison (8) est respectivement inséré dans les ouvertures de réception (12) orientées par paires en position correcte l'une par rapport à l'autre, afin de relier les partenaires de liaison (2, 3) entre eux de manière solidaire en rotation.

10. Procédé selon la revendication 9, **caractérisé en ce que** les éléments de liaison (8) sont réalisés sous forme de rivets, les au moins deux partenaires de liaison (2, 3) étant reliés entre eux par l'intermédiaire d'une opération de rivetage.

11. Procédé selon la revendication 9 ou 10, **caractérisé en ce que**, dans une étape intermédiaire, le troisième partenaire de liaison (4) est prépositionné en position correcte par rapport au premier partenaire de liaison (2) par l'intermédiaire de l'autre liaison par complémentarité de forme (14), et les ouvertures de réception (12) de la première et de la troisième section de réception (9, 11) sont orientées par paires en position correcte l'une par rapport à l'autre dans la direction de rotation autour de l'axe principal (H).
